**Europäisches Patentamt**

**European Patent Office**

**Office européen des brevets**

(11) Veröffentlichungsnummer: **0 258 588 B1**

# EUROPÄISCHE PATENTSCHRIFT

(45) Veröffentlichungstag der Patentschrift: **29.04.92**

(51) Int. Cl.⁵: **G01B 11/30**

(21) Anmeldenummer: **87110207.5**

(22) Anmeldetag: **15.07.87**

(54) **Optisch arbeitendes Oberflächenprüfgerät.**

(30) Priorität: **04.09.86 DE 3630124**

(43) Veröffentlichungstag der Anmeldung:
**09.03.88 Patentblatt 88/10**

(45) Bekanntmachung des Hinweises auf die
Patenterteilung:
**29.04.92 Patentblatt 92/18**

(84) Benannte Vertragsstaaten:
**AT BE CH DE ES FR GB GR IT LI LU NL SE**

(56) Entgegenhaltungen:
DE-A- 1 548 302
US-A- 4 110 607
US-A- 4 201 910
US-A- 4 204 772
US-A- 4 454 417

PATENT ABSTRACTS OF JAPAN, Band 8, Nr.
18 (P-250)[1455], 26. Januar 1984; & JP-A-58
176 505 (OLYMPUS KOGAKU KOGYO K.K.)
17-10-1983

(73) Patentinhaber: **Feinprüf Perthen GmbH
Feinmess- und Prüfgeräte
Brauweg 38
W-3400 Göttingen(DE)**

(72) Erfinder: **Fahl, Christoph
von Bar-Strasse 10
W-3400 Göttingen(DE)**

(74) Vertreter: **Barthelt, Hans-Peter, Dipl.-Ing. et al
Patentanwälte Dr.-Ing. R. Rüger Dipl.-Ing. H.P.
Barthelt Webergasse 3 Postfach 348
W-7300 Esslingen a.N.(DE)**

## Beschreibung

Die Erfindung betrifft ein optisch arbeitendes Oberflächenprüfgerät mit den Merkmalen des Oberbegriffs des Anspruchs 1.

In der Praxis sind derartige optisch, d.h. berührungsfrei arbeitende Oberflächenprüfgeräte bekannt, die dazu dienen, das Oberflächenprofil eines Werkstücks im μm-Bereich zu messen. Diese Geräte verwenden im wesentlichen die auch in CD-Plattenspielern verwendeten optischen Einrichtungen, d.h. den dort eingesetzten sogenannten "Lightpen", der starr im Gehäuse des Gerätes angebracht ist. Das Objektiv ist in der Nähe einer der Stirnseiten des Gehäuses zwischen zwei parallel und mit Abstand voneinander angeordneten Blattfedern längs der optischen Achse beweglich gelagert. Zur Fokussierung des Objektivs ist eine elektrodynamische Antriebseinrichtung vorgesehen, die das Objektiv entgegen der Wirkung der Blattfedern längs der optischen Achse verschiebt, bis ein gegebenes Maß der Fokussierung erreicht ist. Die Fokussierung wird im "Lightpen" mit Hilfe mehrerer Fotodioden oder Fototransistoren kontrolliert, auf die das Bild des Leuchtflecks mit Hilfe des Objektivs sowie des Kollimators abgebildet wird, das die Lichtquelle in Gestalt eines Lasers über den Kollimator und dem Objektiv auf der zu prüfenden Oberfläche erzeugt. Das Bild des Leuchtflecks auf den Fotodioden ist dabei gegenüber dem Leuchtfleck auf der zu prüfenden Oberfläche vergrößert, um das gewünschte hohe Auflösungsvermögen zu erhalten.

Entsprechend dem Höhenprofil der zu vermessenden Oberfläche entstehen Schwankungen bei der Fokussierung des Objektivs, die durch Nachregeln des Objektivs mit Hilfe der Antriebseinrichtung ausgeglichen werden. Die notwendige Verstellung des Objektivs ist deswegen ein Maß für das Höhenprofil der zu prüfenden Oberfläche am Ort der Ausleuchtung durch den Leuchtfleck.

Um die Auslenkung des Objektivs zu messen, ist mit dem Objektiv eine Abstandsmeßeinrichtung gekuppelt, die auf induktive Weise arbeitet, wobei ihr Anker achsparallel zu der optischen Achse von dem Objektiv bewegt wird.

Bei der bekannten Anordnung tritt das Licht an einer der Stirnseiten des Gehäuses aus, womit die Anwendung des bekannten Gerätes praktisch auf große ebene Flächen beschränkt ist, bei denen etwa begrenzende Ränder einen größeren Abstand voneinander aufweisen als das Gehäuse im Querschnitt rechtwinklig zu der optischen Achse. Wandungen von Bohrungen, deren Durchmesser kleiner als die Höhe des Gehäuses ist, können auf diese Weise nicht gemessen werden.

Durch die Anordnung der Antriebseinrichtung unmittelbar am Objektiv treten Erwärmungen auf, die bei der Verwendung dieses optischen Systems im CD-Plattenspieler unkritisch sind, jedoch Meßfehler hervorrufen, wenn mit einem solchen optischen System Längenmessungen vorgenommen werden.

Aus der US-A-4204 772 ist ein optisches Meßsystem bekannt, mit dessen Hilfe die räumliche Tiefe benachbarter Flächen berührungslos vermessen werden soll. Das bekannte Meßsystem enthält hierzu einen Laser, der ein in sich paralleles Lichtstrahlenbündel aussendet. Das parallele Laserlicht ist parallel, aber seitlich versetzt zu der optischen Achse einer Bikonvexlinse und gelangt deswegen durch einen bezüglich der optischen Achse der Linse lateral liegenden Fleck auf einen hinter der Linse angeordneten Umlenkspiegel, der den Strahl etwa rechtwinklig zu der optischen Achse der Sammellinse knickt. Der Lichtstrahl von dem Laser gelangt so auf die zu vermessende Oberfläche, an der er in Richtung auf den Umlenkspiegel zumindest diffus zurückreflektiert wird. Das zurückreflektierte Licht trifft auf den erwähnten Umlenkspiegel und gelangt von dort parallel zur optischen Achse der Sammellinse durch deren Mitte zu einem weiteren, hinter der Linse angeordneten Umlenkspiegel, der das reflektierte Licht über eine weitere Bikonvexlinse auf einen Sensor spiegelt. Die zwischen den beiden Spiegeln angeordnete Sammellinse ist längs ihrer optischen Achse mechanisch zu verstellen, um das Laserlicht auf der Oberfläche des Werkstücks zu fokussieren. Die zur Fokussierung notwendige Verschiebung der Linse ist ein Maß für den Abstand der ausgemessenen Fläche von der optischen Achse der Sammellinse.

Da mit diesem optischen System die Oberflächen in Bohrungen vermessen werden sollen, sitzt der eine Umlenkspiegel am Ende eines entsprechend langen Rohres. Um zu vernünftigen Rohrdurchmessern zu kommen, muß die verschiebbare Sammellinse,durch die sowohl das reflektierte als auch das Laserlicht hindurchgeht, eine lange Brennweite haben, was zu einem kleinen Öffnungswinkel der Lichtstrahlen und damit zu einer entsprechend geringen Änderung des Zerstreuungskreises führt, wenn sich der Abstand der zu vermessenden Oberfläche von der optischen Achse verändert.

Infolge der lateralen Durchstrahlung der verstellbaren Sammellinse mit dem Laserlicht treten in dem Laserlichtbündel tangentiale und sagittale Lichtstrahlen auf, die bekanntlich bei Bikonvexlinsen unterschiedliche Brennweiten haben. Der auf der Oberfläche fokussierte Fleck des Laserlichts zeigt dementsprechend Astigmatismus, so daß die Empfindlichkeit des bekannten Systems zur Rauheitsmessung an Oberflächen nicht ausreicht.

Ausgehend hiervon ist es Aufgabe der Erfindung, ein Oberflächenprüfgerät zu schaffen, mit dem sich auch die Wandungen von schmalen Nuten, Ausnehmungen u.dgl. sowie Bohrungen geringen Durchmessers messen lassen.

Zur Lösung dieser Aufgabe ist das Oberflächenprüfgerät erfindungsgemäß durch die Merkmale des unabhängigen Anspruches gekennzeichnet.

Durch die Verwendung des rohrförmigen Arms, an dessen Vorderende seitlich das Meßlicht austritt, kann auch in Bohrungen oder an ähnlich begrenzten Stellen eines Werkstückes gemessen werden, wenn der Abstand zwischen den begrenzenden Wänden an der Meßstelle nur geringfügig größer ist als der Außendurchmesser des Arms. Dieser Durchmesser kann beträchtlich kleiner sein als die übrigen Abmessungen des Gehäuses und es lassen sich auf diese Weise bereits Bohrungen ab ca. 8 mm ausmessen. Der am Hinterende des Arms sitzende Kollimator, der Strahlenteiler, der Lichtsensor und die Lichtquelle stören dabei nicht, denn sie sind weit aus dem Meßfeld herausgerückt.

Da die Fokussierung durch Verschwenken des Arms geschieht, bleiben die geometrischen Verhältnisse zwischen dem Objektiv, der Lichtquelle und dem Lichtdetektor konstant. Außerdem brauchen deswegen auch keine Antriebsmittel im Bereich des Objektivs vorgesehen zu werden, sondern die Antriebsmittel können an der Rückseite des Arms angreifen, wobei dort entstehende Wärmeentwicklungen keinen Einfluß auf die Meßgenauigkeit haben. Der Arm, der auch aus optischen Gründen als Rohr ausgebildet ist, hat sehr hohe Steifigkeit und kann deswegen dem Oberflächenprofil exakt folgen.

Wegen des abgesetzt angeordneten Antriebs zum Verschwenken des Arms, d.h. zum Nachfokussieren, ist es moglich, leistungskräftige und damit voluminöse Antriebseinrichtungen zu verwenden, die in der Lage sind, größere Verstellkräfte zu erzeugen als miniaturisierte Antriebseinrichtungen in der Nähe des Objektivs, so daß eine schnellere Fokussierung und damit ein besseres Verfolgen der Profilgestalt möglich ist.

Wenn der Arm bezüglich seiner Schwenkachse, die rechtwinklig zur optischen Achse verläuft, zumindest statisch ausgewuchtet ist, braucht die verwendete Antriebseinrichtung kein Haltemoment zu erzeugen, sondern es genügt, wenn sie jeweils nur zur Armverstellung eingeschaltet und nach Erreichen der Soll-, d.h. Fokusposition, wieder stillgesetzt wird.

Mit dem Oberflächenprüfgerät kann auch auf sehr großen Flächen gemessen werden, wenn der Arm in Verlängerung einer der Umfangsseiten des Gehäuses verläuft und diese Umfangsseite gegenüber der in dieselbe Richtung weisenden Seite des Arms, nämlich der, die die Lichtaustrittsöffnung enthält, zurückspringt oder mit dieser zumindest in einer Ebene liegt.

Damit auf der die Lichtaustrittsöffnung enthaltenen Seite des Arms keine störenden Teile des im Durchmesser verhältnismäßig großen Lightpen hervorstehen, ist die optische Achse zwischen dem Umlenkspiegel und dem Strahlenteiler abgewinkelt. Die Abwinkelung kann im einfachsten Falle durch Parallelversatz erfolgen, wobei zur Strahlführung ein Parallelogrammprisma bzw. zwei Porroprismen verwendet werden können.

Um eine möglichst genaue Nachstellung erreichen zu können, hat das Objektiv eine möglichst kurze Brennweite und es ist deswegen bevorzugt am Vorderende des Armes untergebracht, damit die Schnittweite des Objektivs nicht allzu sehr von der Brennweite abzuweichen braucht.

Wenn das Objektiv in Längsrichtung in dem Arm zwischen dem Umlenkspiegel und dem Lightpen angeordnet ist, ist vorzugsweise seine Schnittweite größer als seine Brennweite. Es ist aber auch möglich, den Umlenkspiegel in den Strahlengang innerhalb des Objektivs zu legen, so daß die optische Achse der letzten Linse des Objektivs rechtwinklig zu der Längsachse des Armes verläuft. In diesem Falle wäre gleichzeitig die Lichtaustrittsöffnung des Arms dicht verschlossen, so daß kein Staub eintreten kann.

Die vorherige Ausführung des Objektivs hat allerdings den Vorteil, daß es als Ganzes in einer in den Arm zu steckenden Fassung montiert werden kann, die keine Abwinkelungen des Strahlengangs enthält.

Wenn der Wegaufnehmer einen Differentialübertrager mit einem von im wesentlichen ebenen Polflächen begrenzten Luftspalt enthält, der im wesentlichen radial, bezogen auf die Schwenkachse des Armes verläuft und in dem ein flächenförmiges ferromagnetisches Stück bewegbar ist, das an dem Arm angebracht ist und sich radial bezüglich der Schwenkachse des Armes erstreckt, wird insgesamt eine Anordnung erhalten, die mit großen Toleranzen hergestellt werden kann und deswegen in ihrem Meßverhalten unkritisch ist. Selbst bei groß tolerierter Montage besteht nicht die Gefahr, daß irgendwelche bewegten Teile an feststehenden Teilen streifen. Die Anordnung ist damit auch sehr unempfindlich gegenüber Erschütterungen.

Als Antriebseinrichtung zum Verschwenken des Armes kommt bevorzugt eine Tauchspulenanordnung zur Verwendung, deren Tauchspule innerhalb des Gehäuses an dem Arm bzw. einer Verlängerung des Armes sitzt und dessen das statische Magnetfeld erzeugende Einrichtung mit dem Gehäuse gegebenenfalls einstellbar verbunden ist, so daß mit dem Arm selbst nur verhältnismäßig leichte Teile verbunden sind, die dessen Trägheitsmoment um die Schwenkachse nicht wesentlich erhöhen. Der Lightpen sitzt im Interesse eines kleinen Trägheitsmomentes ohnehin in unmittelbarer Nähe der Schwenkachse.

In der Zeichnung ist ein Ausführungsbeispiel des Gegenstandes der Erfindung dargestellt. Es zeigen:

Fig. 1    ein Oberflächenprüfgerät gemäß der Erfindung in einer perspektivischen Gesamtansicht,

Fig. 2    das Oberflächenprüfgerät gemäß Fig. 1 in einem die optische Achse enthaltenden Längsschnitt und

Fig. 3    schematisiert den Strahlengang in dem Oberflächenprüfgerät gemäß der Erfindung zwischen den optischen Keilen und den Fotodioden.

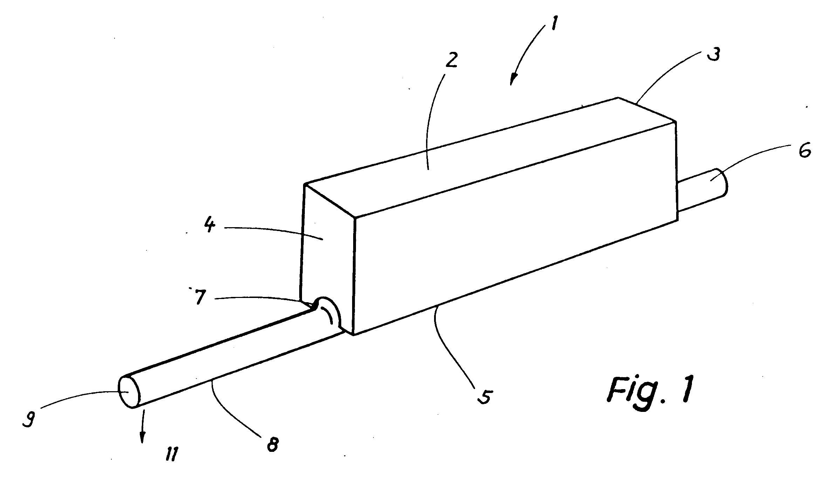

In Fig. 1 ist ein optisch und damit berührungsfrei arbeitendes Oberflächenprüfgerät 1 veranschaulicht, das ein etwa quaderförmiges längliches Gehäuse 2 mit zwei Stirnseiten 3 und 4 sowie einer Unterseite 5 aufweist. An der Stirnseite 3 ist ein zylindrischer Aufnahmezapfen 6 befestigt, um das Oberflächenprüfgerät 1 in einer Meßvorrichtung oder einem Meßstativ zu halten. An der zwischen der Stirnseite 4 und der Unterseite 5 begrenzten Kante steht aus dem Gehäuse 2 aus einer Öffnung 7 ein rohrförmiger länglicher Arm 8 mit einem Vorderende 9 hervor, der sich parallel zu der Längsrichtung des Gehäuses 2 erstreckt. In der Nähe des Vorderendes 9 tritt, wie durch einen Pfeil 11 veranschaulicht, rechtwinklig zu der Längsachse des Armes 8 etwa in Richtung parallel zu der Normalen der Unterseite 5 das Meßlicht aus bzw. wieder ein.

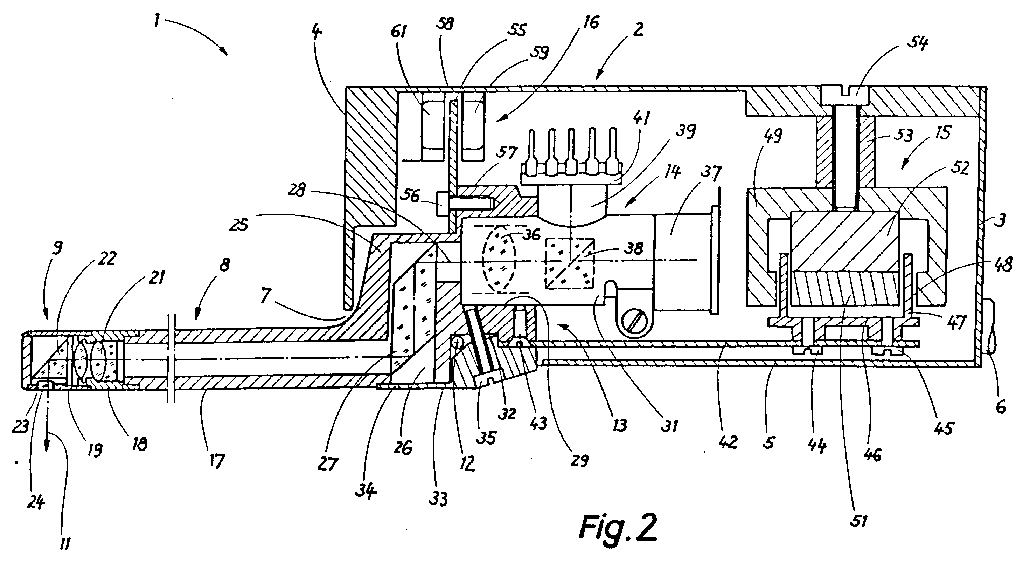

Die Unterseite 5 springt gegenüber der Seite des Armes 8 mit der Lichtaustrittsöffnung 23 zurück. Im Inneren des Gehäuses 2 ist der Arm 8 um seine Querachse, d.h. um eine zu der Längsachse des Armes 8 rechtwinklig verlaufenden Achse begrenzt schwenkbar gelagert. Die Lagerung ist möglichtst spielfrei, leichtgängig und hysteresefrei, beispielsweise durch die Verwendung eines Miniaturwälzlagers, wie dies in der Meßtechnik an sich bekannt ist. Die Achse ist in Fig. 2 bei 12 veranschaulicht.

Im Inneren des Gehäuses 2 ist an einer Rückseite 13 des Armes 8, die hinter der Schwenkachse 12 sitzt, ein sogenannter "Lightpen" 14 angebracht, der das notwendige Meßlicht erzeugt und das von der zu prüfenden Oberfläche reflektierte Licht auswertet. Die Verschwenkung des Armes 8 erfolgt mit Hilfe einer Antriebseinrichtung 15, während das Maß der Schwenkbewegung mittels eines Wegaufnehmers 16 gemessen wird.

Im einzelnen besteht aus fertigungstechnischen Gründen der außenliegende Teil des Arms 8 aus mehreren zueinander koaxialen und gleichen Außendurchmesser aufweisenden rohrförmigen Abschnitten 17, 18 und 19, und zwar ist auf das vom Gehäuse 2 abliegende Ende des rohrförmigen Abschnitts 17 der rohrförmige Abschnitt 18 aufgesteckt und dort befestigt. Der rohrförmige Abschnitt 18 enthält ein mehrlinsiges kurzbrennweitiges Objektiv 21, für das der rohrförmige Abschnitt 18 die Fassung darstellt. An dem vom Gehäuse 2 abliegenden Ende des rohrförmigen Abschnittes 18 ist der rohrförmige Abschnitt 19 aufgesteckt und dort befestigt. Dieser Abschnitt 19 enthält als Umlenkspiegel ein Porroprisma 22, das das aus dem Objektiv 21 austretende Licht zu einer in dem rohrförmigen Abschnitt 19 seitlich angeordneten Lichtaustrittsöffnung 23 umlenkt, die durch eine planparallele Glasplatte entsprechenden Durchmessers 24 verschlossen ist. Wegen der Abstandsverhältnisse hat das Objektiv 21 vorzugsweise eine Schnittweite, d.h. einen Abstand zwischen dem Scheitelpunkt der letzten Linse und der Bildebene, die größer ist als die Brennweite, die zwischen der hinteren Hauptebene und der Bildebene gemessen ist.

Der rohrförmige Abschnitt 17 geht an seinem dem Gehäuse 2 benachbarten Ende einstückig in einen Block 25 über, der sich, ausgehend von dem rohrförmigen Abschnitt 17, nach oben erstreckt und nach unten nicht über den Umfang des rohrförmigen Abschnittes 17 hinausgeht. Der Block 25 enthält eine von unten her angebrachte Sackbohrung 26, deren Achse die miteinander zusammenfallenden Achsen der rohrförmigen Abschnitte 17, 18 und 19 rechtwinklig schneidet. In dieser Sackbohrung 26 steckt zur achsparallelen Strahlumlenkung ein parallelogrammförmiges Prisma 27, dessen eine Lichtaustrittsöffnung dem Innenraum des rohrförmigen Abschnittes 17 gegenübersteht. Die andere Lichtaustrittsöffnung des Prismas 27 zeigt in eine Stufenbohrung 28 des Blocks 25, dessen Achse die Achse der Sackbohrung 26 ebenfalls rechtwinklig schneidet und die in ihrem Abschnitt 29 mit dem größeren Durchmesser ein Gehäuse 31 des Lightpen 14 aufnimmt.

Unterhalb der Stufenbohrung 28 ist in dem Block 25 eine rechteckige Ausnehmung 32 angebracht, in deren Ecke die Schwenkachse 12 liegt. An dieser Stelle wird die Schwenkachse 12 durch einen die Ausnehmung 32 verschließenden Deckel 33 gehalten, der mit einer Verlängerung 34 außerdem die nach unten offene Sackbohrung 26 verschließt. Die Halterung des Deckels 33 geschieht mittels einer Schraube 35, die durch eine Bohrung des Deckels in ein Gewinde in dem Block 25 eingeschraubt ist. Auch der Deckel 33 steht nach unten nicht über den Außenumfang des rohrförmigen Abschnitts 17 vor.

Der verwendete Lightpen 14 kann ein solcher sein, wie er auch in CD-Plattenspielern Verwendung findet. In dem aus zwei Rohrstücken T-förmig zusammengesetzten Gehäuse 31 sitzt im Vorderende, d.h. dem in der Stufenbohrung 29 aufgenommenen Ende, ein Kollimator 36, während in das Hinterende des Gehäuses 31 eine Lichtquelle in Gestalt einer in einem Gehäuse 37 untergebrachten Laserlichtquelle eingesteckt ist. Zwischen dem Kollimator 36 und der Laserlichtquelle 37 befindet sich ein Strahlenteiler 38, der das zurücklaufende Licht oder zumindest einen großen Teil desselben rechtwinklig nach oben in einen Rohransatz 39 ausspiegelt, in dem in der Brennebene des Kollimators 36 mehrere flächige Fotodioden oder Fototransistoren angeordnet sind. Die Fotodioden sind in einem DIL-Gehäuse 41 untergebracht.

Auch die Lichtaustrittsfläche der in dem Gehäuse 37 sitzenden Halbleiterlaserdiode, die im sichtbaren Bereich arbeitet, befindet sich in der Brennebene des Kollimators 36.

Zur Justage ist in bekannter Weise der Strahlenteiler 38 in dem Gehäuse 31 dreh- und verschiebbar, ebenso wie dies die Laserlichtquelle 37 ist.

Zwischen dem Deckel 33 und dem Block 25 ist an letzterem ein Hebel 42 mittels einer Schraube 43 befestigt, der sich in das Gehäuse 2 etwa in Verlängerung des rohrförmigen Teils des Armes 8 erstreckt. An seinem von dem Arm 8 abliegenden Ende ist mittels zweier Schrauben 44 und 45 ein Spulenträger 46 für eine aus Übersichtlichkeitsgründen nicht dargestellte Tauchspule befestigt, die auf einen zylindrischen rohrförmigen Teil 47 aufgewickelt ist. Der rohrförmige Teil 47 des Spulenträgers 46 steckt in einem ringförmigen zylindrischen Luftspalt 48 eines aus zwei Teilen 49 und 51 bestehenden Magnetjoches, zwischen denen ein Permanentmagnet 52 angeordnet ist. In dem Luftspalt 48 entsteht auf diese Weise ein im wesentlichen radial gerichtetes Feld.

Das Magnetjoch ist mit seinem Abschnitt 49 mittels eines Distanzstücks 53 und einer Schraube 54 in dem Gehäuse 2 oberhalb des Hebels 42 befestigt.

Das Magnetjoch 49, 51 zusammen mit dem Permanentmagneten 52 sowie der auf den Spulenträger 47 aufgewickelten Tauchspule bildet die Antriebseinrichtung 15 zum Verschwenken des Armes 8 um die Schwenkachse 12.

Wie erwähnt, wird das Maß der Schwenkbewegung durch den Wegaufnehmer 16 erfaßt, der ein flaches ferromagnetisches Stück 55 enthält, das mittels einer Schraube 56 an einem Vorsprung 57 des Blocks 25 angeschraubt ist, und zwar so, daß sich das plattenförmige ferromagnetische Stück 55 radial bezüglich der Schwenkachse 12 erstreckt. Das ferrogmagnetische Stück 55 führt in einen Luftspalt 58 eines von zwei mit ihren Polflächen einander gegenüberstehenden Schalenkernen 59 und 61 gebildeten Differentialübertragers. Der Differentialübertrager 59, 61 wird an einer bekannten Elektronik betrieben, wie sie in der Meßtechnik für Wegaufnehmer gebräuchlich ist. Der Luftspalt 58 ist dabei so reichlich bemessen, daß das ferromagnetische Stück 55 die Schwenkbewegung zum Nachführen des Armes 8 nicht durch Anstoßen an eine der einander gegenüberliegenden Polflächen behindert. Da der Meßhub wegen der Art der zu messenden Oberfläche nur wenige Zehntel Millimeter beträgt, genügt ein entsprechend geringes Spiel des ferromagnetischen Stückes 55 in dem Luftspalt 58.

Die gesamte Anordnung an dem Arm 8 ist so bemessen, daß sich der Arm 8 mit allen seinen Anbauten bezüglich seiner Schwenkachse 12 im statischen Gleichgewicht befindet, d.h. er behält jede Lage bei, in die er durch die Antriebseinrichtung 15 verschwenkt wurde, wenn nach dem Verschwenken der Strom für die Tauchspule abgeschaltet wird. Außerdem sind die der Übersichtlichkeit halber nicht veranschaulichten Verdrahtungen so geführt, daß sie auf den Arm 8 nur ein möglichst geringes Moment ausüben.

Die Funktionsweise des beschriebenen Oberflächenprüfgerätes 1 ist folgendermaßen: Mit Hilfe eines Meßstatives wird das Oberflächenprüfgerät 1 über einer zu prüfenden Oberfläche, beispielsweise der Innenwandung einer Bohrung, in Stellung gebracht, und zwar so, daß aus der Lichtaustrittsöffnung 23 austretendes Licht senkrecht auf die zu prüfende Oberfläche auftrifft, d.h. die optische Achse des gesamten optischen Systems steht auf der zu prüfenden Oberfläche senkrecht. In dieser Stellung verläuft die Längsachse des Armes 8 angenähert parallel zu der auszumessenden Oberfläche und außerdem befindet sich der Arm 8 bezüglich dem Gehäuse 2 etwa in der Mitte seines möglichen Schwenkwinkels, der im wesentlichen durch die Bewegung des ferromagnetischen Stücks 55 in dem Luftspalt 58 begrenzt ist. In dieser Stellung verläuft der aus dem Gehäuse 2 austretende Teil des Armes 8, wie oben erwähnt, etwa parallel zu der Längserstreckung des Gehäuses 2.

In diesem Zustand wird die Laserlichtquelle 37 eingeschaltet, deren Licht durch den Strahlenteiler 38 hindurchtritt und zu dem Kollimator 36 gelangt. Aus dem Kollimator 36 tritt das Licht als paralleles Lichtbündel aus und gelangt zu dem Umlenkprisma 27, wo das in sich parallele und zu der optischen Achse parallele Lichtbündel an den Spiegelflächen in den Hohlraum des außerhalb des Gehäuses 2 verlaufenden Teils des Armes 8 umgelenkt wird, um an dem Vorderende 9 auf das Objektiv 21 aufzutreffen. In dem Objektiv 21, dessen optische Achse gegenüber der optischen Achse des Kollimators 36 durch das Prisma 27 versetzt ist, wird das Licht zu einem Brennpunkt gesammelt. Da jedoch unmittelbar hinter der Austrittspupille des Objektivs 21 das Porroprisma 22 angeordnet ist, tritt der von dem Objektiv 21 erzeugte Lichtkegel radial aus dem Arm 8 durch die Lichtaustrittsöffnung 23 aus, so daß die leuchtende Fläche der Laserdiode, die in dem Gehäuse 37 untergebracht ist, auf die Werkstückoberfläche projiziert wird. Der erzeugte Lichtpunkt hat Abmessungen von unter 1 µm, d.h. der Lichtpunkt paßt in einen Kreis von einem Durchmesser kleiner als 1 µm.

An der zu prüfenden Oberfläche wird das Licht reflektiert und tritt erneut durch die Lichtaustrittsöffnung 23 in den Arm 8 wieder ein. An der spiegelnden Fläche des Porroprismas 22 wird das von der zu prüfenden Oberfläche in den Arm 8 zurückreflektierte Licht in Richtung auf das Objektiv 21 umgelenkt, das den Leuchtfleck auf der zu prüfenden Oberfläche ins Unendliche abbildet, wenn der Leuchtfleck sich im Fokus des Objektivs befindet. Demzufolge entstehen in dem Innenraum des Armes 8 parallele Lichtstrahlen, die von dem Objektiv 21 über das Umlenkprisma 27 zu dem Kollimator 36 gelangen. Infolge des Kollimators 36 entsteht hinter ihm ein reelles Bild des Leuchtflecks auf der zu prüfenden Oberfläche.

Da im Strahlengang zwischen dem Kollimator 36 und der Laserlichtquelle der Strahlenteiler 38 angeordnet ist, wird das von der zu prüfenden Oberfläche zurückgeworfene Licht nach oben zu den in dem Gehäuse 41 befindlichen Fotodioden umgelenkt, auf die mit Hilfe des Objektivs 21 und des Kollimators 36 der Leuchtfleck vergrößert projiziert wird.

Diese Abbildung des Leuchtflecks ist allerdings nur dann scharf, wenn das Objektiv 21 gegenüber derjenigen Stelle an der zu prüfenden Oberfläche, an der der Leuchtfleck entsteht, richtig fokussiert ist.

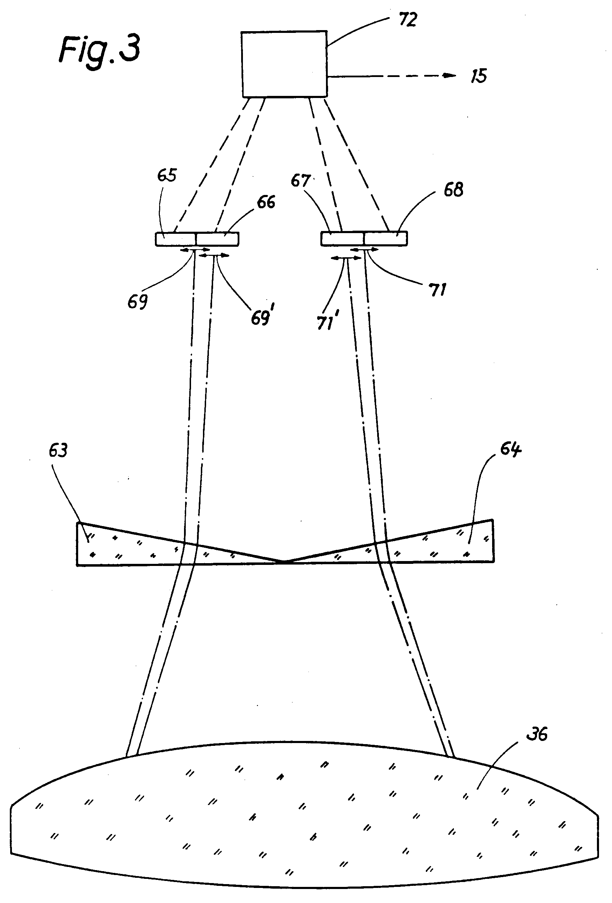

Die Kontrolle der Fokussierung erfolgt, wie Fig. 3 zeigt, mit Hilfe zweier optischer Keile 63 und 64, die im Strahlengang zwischen dem Kollimator 36 und insgesamt vier zu zwei Paaren angeordneten Fotodioden 65, 66 und 67, 68. Die beiden optischen Keile 63 und 64 liegen mit ihrer Spitze, wie gezeigt, auf der optischen Achse des Kollimators 36. Durch die beiden optischen Keile 63 und 64 entstehen, wenn ihr Keilwinkel und der Brechungsindex richtig gewählt sind, zwei nicht aneinander anstoßende Bilder des Leuchtflecks in der Bildebene, die in Fig. 3 durch zwei Doppelpfeile 69 und 71 schematisch veranschaulicht sind. Diese Bilder entstehen dort dann, wenn sich der Leuchtfleck im Brennpunkt des Objektivs 21 befindet.

Möglichst genau dort, wo die beiden reellen Bilder 69 und 71 bei richtig fokussiertem Objektiv 21 entstehen, befinden sich die lichtempfindlichen Sperrschichten der schematisch gezeigten Fotodioden 63 bis 68, und zwar so, daß das Bild 69 zum Teil auf der Fotodiode 65 und zum Teil auf der Fotodiode 66 erscheint, während die beiden Fotodioden 67 und 68 so angeordnet sind, daß das Bild 61 sowohl auf der Fotodiode 67 als auch zum anderen Teil auf der Fotodiode 68 liegt. Wenn darüber hinaus der Seitenversatz der Fotodioden stimmt, erhält die Fotodiode 66 aus dem Bild 69 genau so viel Licht wie die Fotodiode 67 aus dem Bild 71, während andererseits die Fotodioden 65 und 68 aus den zugehörigen Bildern ebenfalls jeweils untereinander gleich viel Licht erhalten, so daß das Ausgangssignal der Fotodiode 66 gleich dem Ausgangssignal der Fotodiode 65 und das Ausgangssignal der Fotodiode 65 gleich dem Ausgangssignal der Fotodiode 67 ist. Um die richtige Fokussierung erkennen zu können, sind im Fokusfall außerdem bevorzugt die Ausgangssignale sämtlicher Fotodioden 65 bis 68 gleich, wenn das Objektiv 21 auf den Leuchtfleck fokussiert ist.

Es sei nun angenommen, daß der Leuchtfleck von dem Objektiv 21 eine größere Entfernung hat als der Brennpunkt, d.h. der Leuchtfleck liegt hinter dem Brennpunkt. In diesem Falle beginnen die reellen Bilder infolge der beiden optischen Keile 63 und 64 sich aufeinander zuzubewegen und außerdem beginnt der Bereich größter Schärfe vor den Sperrschichten der Fotodioden 65 und 68 zu liegen. Dieser Fall ist in Fig. 3 durch die reellen Bilder 69' und 71' veranschaulicht. Es ist zu ersehen, daß in diesem Falle gegenüber dem vorherigen fokussierten Zustand die einander benachbarten Fotodioden 66 und 67 zunehmend mehr Licht erhalten als die außenliegenden 65 und 68. Hierdurch tritt an den Fotodioden eine Verschiebung des Ausgangssignals auf, das von einer nachgeschalteten Steuerschaltung 72 ausgewertet wird, die daraufhin die Antriebseinrichtung 15 in Gang setzt, um den Arm 8 so zu verschwenken, daß die vorherige Gleichgewichtsbedingung, bei der sämtliche Fotodioden 65 bis 68 das gleiche Ausgangssignal erzeugt haben, wieder erhalten wird. Infolge des Verschwenkens des Arms in Sinne der gewünschten Gleichgewichtsbedingung wandern die Bilder des Leuchtflecks auf den Fotodioden erneut nach außen, bis sie die Lagen 69 und 71 erreicht haben.

Umgekehrt liegen die reellen Bilder des Leuchtflecks gegenüber den dargestellten Lagen 69 und 71 weiter außen, wenn der Leuchtfleck auf der zu messenden Oberfläche näher an dem Objektiv 21 liegt als der Brennpunkt. Tritt diese Situation ein, so steuert die Schaltung 72 die Antriebseinrichtung 15 in der entgegengesetzten Richtung, d.h. der Arm 8 wird entsprechend von der zu prüfenden Oberfläche wegbewegt, bis die vorherige Gleichgewichtsbedingung wieder erreicht ist.

Dieses elektrooptische Meßverfahren ist außerordentlich empfindlich und gestattet, Höhenunterschiede im Profil der zu messenden Oberfläche zu erfassen, die im Nanometer-Bereich liegen.

Es läßt sich ohne weiteres erkennen, daß die Fotodioden 65 bis 68 nicht exakt in der Brennebene angeordnet werden müssen, sondern daß es nur auf die relative Änderung der Signale ankommt, die auch richtig erfaßt wird, wenn die Fotodioden 65 bis 68 an dem Kollimator 36 näher oder weiter entfernt angeordnet sind als es der Brennweite entspricht.

Die zum Fokussieren bzw. zum Aufrechterhalten der Gleichgewichtsbedingung an den Fotodioden 65 bis 68 notwendige Schwenkbewegung des Armes 8 wird mit hoher Genauigkeit von dem Wegaufnehmer 16 gemessen, so daß dessen Ausgangssignal ein Maß für die Profilgestalt der zu, prüfenden Oberfläche ist, wenn diese relativ zu dem aus der Lichtaustrittsöffnung 23 austretenden Licht und nicht winkelig zu der optischen Achse der Lichtaustrittsöffnung 23 bewegt wird, da zum Aufrechterhalten der Gleichgewichtsbedingung an den Fotodioden 65 bis 68 der Arm 8 entsprechend der Profilgestalt ständig nachgeregelt werden muß. Die Regelbewegung folgt dabei exakt dem Höhenprofil.

## Patentansprüche

1. Oberflächenprüfgerät (1) mit einem Gehäuse (2), einer in dem Fokus eines Kollimators (36) angeordneten Lichtquelle (37), einem in dem Fokus des Kollimators (36) angeordneten Lichtdetektor (41), einem zwischen dem Kollimator (36) und der Lichtquelle (37) sowie dem Lichtdetektor (41) angeordneten Strahlenteiler (38), einem das aus dem Kollimator (36) austretende Licht auf die zu messende Oberfläche fokussierenden Objektiv (21), einer Antriebseinrichtung (15) zur Veränderung des Abstandes zwischen dem Objektiv (21) und der zu messenden Oberfläche sowie einem Wegaufnehmer (16) zur Messung der Auslenkung des Objektivs (21), dadurch gekennzeichnet, daß in dem Gehäuse (2) ein rohrförmiger, aus dem Gehäuse (2) herausragender Arm (8) mit einem Vorder- und einem Hinterende (9, 13) um seine Querachse (12) schwenkbar gelagert ist, durch den das Licht hindurch läuft und aus bzw. in den das Licht an seinem Vorderende (9) im wesentlichen radial bezüglich seiner Längsachse aus einer Lichtöffnung (23) aus- bzw. eintritt, wozu der Arm (8) an Seinem aus dem Gehäuse (2) herausragenden Vorderende (9) einen Umlenkspiegel (22) enthält, daß an dem in dem Gehäuse (2) befindlichen Hinterende (13) des Arms (8) der Kollimator (36), der Lichtdetektor (41), der Strahlenteiler (38) sowie die Lichtquelle (37) angeordnet sind, und daß die Antriebseinrichtung (15) sowie der Wegaufnehmer (16) zwischen dem Gehäuse (2) und dem Arm (8) wirksam sind.

2. Oberflächenprüfgerät nach Anspruch 1, dadurch gekennzeichnet, daß der Arm (8) bezüglich seiner Querachse (12), um die er schwenkbar ist, zumindest statisch ausgewuchtet ist.

3. Oberflächenprüfgerät nach Anspruch 1, dadurch gekennzeichnet, daß das Gehäuse (2) voneinander beabstandete Stirnseiten (3, 4) hat, zwischen denen sich Umfangsseiten (5) erstrecken, daß der Arm (8) in Verlängerung einer der Umfangsseiten (5) des Gehäuses (2) verläuft und daß diese Umfangsseite (5) gegenüber der in dieselbe Richtung weisenden, die Lichtaustrittsöffnung (23) enthaltenden Seite des Arms (8) nicht hervorsteht.

4. Oberflächenprüfgerät nach Anspruch 1, dadurch gekennzeichnet, daß sich der Wegaufnehmer (16) sowie die Antriebseinrichtung (15) innerhalb des Gehäuses (2) befinden.

5. Oberflächenprüfgerät nach Anspruch 1, dadurch gekennzeichnet, daß die optische Achse zwischen dem Umlenkspiegel (22) und, dem Strahlenteiler (38) abgewinkelt ist.

6. Oberflächenprüfgerät nach Anspruch 1, dadurch gekennzeichnet, daß die optische Achse zwischen dem Umlenkspiegel (22) und dem Strahlenteiler (38) einen Parallelversatz aufweist.

7. Oberflächenprüfgerät nach Anspruch 1, dadurch gekennzeichnet, daß das Objektiv (21) in dem Arm (8) an dessen Vorderende (9) angeordnet ist.

8. Oberflächenprüfgerät nach Anspruch 1, dadurch gekennzeichnet, daß die Brennweite des Objektivs (21) kürzer als dessen Schnittweite ist.

9. Oberflächenprüfgerät nach Anspruch 1, dadurch gekennzeichnet, daß der Wegaufnehmer (16) einen Differentialübertrager (61, 59) mit einem von Polflächen begrenzten Luftspalt (58) enthält, der im wesentlichen radial, bezogen auf die Schwenkachse (12) des Armes (8) verläuft und in dem ein flächenförmiges, ferromagnetisches Stück (55) bewegbar ist, das an dem Arm (8) befestigt ist und sich radial bezüglich der Schwenkachse (12) des Armes (8) erstreckt.

**10.** Oberflächenprüfgerät nach Anspruch 1, dadurch gekennzeichnet, daß die Antriebseinrichtung (15) eine Tauchspulenantriebseinrichtung ist, deren Tauchspule (47) innerhalb des Gehäuses (2) an dem Arm (8) bzw. einer Verlängerung (42) des Arms (8) sitzt und dessen das statische Magnetfeld erzeugende Einrichtung (49, 51, 52) mit dem Gehäuse (2) gegebenenfalls einstellbar verbunden ist.

**11.** Oberflächenprüfgerät nach Anspruch 10, dadurch gekennzeichnet, daß die Tauchspule (47) in einem Ringspalt (48) steckt.

**12.** Oberflächenprüfgerät nach Anspruch 1, dadurch gekennzeichnet, daß die Lichtquelle ein Laser ist.

**13.** Oberflächenprüfgerät nach Anspruch 1, dadurch gekennzeichnet, daß der Lichtdetektor (41) von mehreren etwa in der Brennebene des Kollimators (36) liegenden Fotodioden oder Fototransistoren (65 bis 68) gebildet ist, und daß zwischen dem Kollimator (36) und dem Lichtdetektor (41) optische Keile (63, 64) liegen, die den Strahlengang auf die Fotodioden bzw. Fototransistoren (65 bis 68) teilen.

**14.** Oberflächenprüfgerät nach Anspruch 1, dadurch gekennzeichnet, daß die Lichtaustrittsöffnung (23) durch glasklares Material verschlossen ist.

## Claims

**1.** A surface testing apparatus (1), having: a casing (2); a light source (37) disposed in the focus of a collimator (36); a light detector (41) disposed in the focus of the collimator (36); a beam divider (38) disposed between the collimator (36) and the light source (37) and the light detector (41); a lens (21) focussing the light emerging from the collimator (36) on to the surface to be measured; a driving device (15) for changing the distance between the lens (21) and the surface to be measured; and a distance sensor (16) for measuring the displacement of the lens (21), characterized in that a tubular arm (8) projecting from the casing (2) and having a front end (9) and a rear end (13), is mounted in the casing (2) to pivot around its transverse axis (12), through which arm the light passes and from which or into which arm the light emerges or enters substantially radially in relation to its longitudinal axis from a light aperture (23), to which end the arm (8) comprises a deflecting mirror (22) at its front end (9) projecting from the casing (2); the collimator (36), the light detector (41), the beam divider (38) and the light source (37) are disposed on the rear end (13) of the arm (8) situated in the casing (2); and the driving device (15) and the distance sensor (16) operate between the casing (2) and the arm (8).

**2.** A surface testing apparatus according to claim 1, characterized in that the arm (8) is at least statically balanced in relation to its transverse axis (12), around which it can pivot.

**3.** A surface testing apparatus according to claim 1, characterized in that the casing (2) has spaced-out end faces (3, 4) between which peripheral sides (5) extend; the arm (8) extends in prolongation of one of the peripheral sides (5); and said peripheral side (5) does not project in relation to that side of the arm (8) which points in the same direction and contains the light outlet aperture (23).

**4.** A surface testing apparatus according to claim 1, characterized in that the distance sensor (16) and the driving means (15) are disposed inside the casing (2).

**5.** A surface testing apparatus according to claim 1, characterized in that the optical axis is bent between the deflecting mirror (22) and the beam divider (38).

**6.** A surface testing apparatus according to claim 1, characterized in that the optical axis has a parallel offset between the deflecting mirror (22) and the beam divider (38).

**7.** A surface testing apparatus according to claim 1, characterized in that the lens (21) is disposed in the arm (8) at its front end (9).

**8.** A surface testing apparatus according to claim 1, characterized in that the focal length of the lens (21) is shorter than its intercept length.

**9.** A surface testing apparatus according to claim 1, characterized in that the distance sensor (16) comprises a differential transmitter (61, 59) having an air gap (58) which is bounded by polar surfaces and which extends substantially radially, referred to the pivoting axis (12) of the arm (8), and in which a blade-like ferromagnetic member (55) can move which is attached to the arm (8) and which extends radially in relation to the pivoting axis (12) of the arm (8).

10. A surface testing apparatus according to claim 1, characterized in that the driving means (15) is a moving coil driving means whose moving coil (47) is disposed inside the casing (2) on the arm (8) or a prolongation (42) of the arm (8) and whose element (49, 51, 52) producing the static magnetic field is possibly adjustably connected to the casing (2).

11. A surface testing apparatus according to claim 10, characterized in that the moving coil (47) is inserted in an annular gap (48).

12. A surface testing apparatus according to claim 1, characterized in that the light source is a laser.

13. A surface testing apparatus according to claim 1, characterized in that the light detector (41) is formed by a number of photodiodes or phototransistors (65 to 68) lying substantially in the focal plane of the collimator (36), and disposed between the collimator (36) and the light detector (41) are optical wedges (63, 64) which divide the ray path to the photodiodes or phototransistors (65 to 68).

14. A surface testing apparatus according to claim 1, characterized in that the light outlet aperture (23) is closed by a transparent material.

**Revendications**

1. Appareil de contrôle de surface (1), comportant : un boîtier (2), une source de lumière (37) agencée au foyer d'un collimateur (36); un détecteur de lumière (41) agencé au foyer du collimateur (36); un organe de fractionnement de rayons (38) agencé entre le collimateur (36) et la source de lumière (37) ainsi qu'entre le collimateur (36) et le détecteur de lumière (41); un objectif (21) focalisant sur la surface à mesurer la lumière sortant du collimateur (36); un dispositif d'entraînement (15) pour modifier la distance entre l'objectif (21) et la surface à mesurer; ainsi qu'un capteur de déplacement (16) pour mesurer le déplacement de l'objectif (21), caractérisé par le fait que dans le boîtier (2) un bras tubulaire (8) ayant une extrémité antérieure et une extrémité postérieure (9, 13), ce bras débordant hors du boîtier (2), est monté avec possibilité de pivotement autour de son axe transversal (12), la lumière passant par ce bras par l'extrémité antérieure (9) duquel elle sort et rentre, cela sensiblement radialement par rapport à l'axe longitudinal dudit bras, en passant par une ouverture de passage de lumière (23), ledit bras (8) contenant à cette fin, en son extrémité antérieure (9) débordant hors du boitier (2), un miroir de déviation (22), par le fait que le collimateur (36), le détecteur de lumière (41), l'organe de fractionnement de rayons (38) ainsi que la source de lumière (37) sont agencés à l'extrémité postérieure (13) du bras (8) située dans le boîtier (2), et par le fait que le dispositif d'entraînement (15) ainsi que le capteur de déplacement (16) opèrent entre le boîtier (2) et le bras (8).

2. Appareil de contrôle de surface selon revendication 1, caractérisé par le fait que le bras (8) est équilibré, au moins statiquement, par rapport à son axe transversal (12) autour duquel il peut pivoter.

3. Appareil de contrôle de surface selon revendication 1, caractérisé par le fait que le boîtier (2) possède des faces frontales (3, 4) écartées l'une de l'autre, entre lesquelles s'étendent des côtés périphériques (5), par le fait que le bras (8) s'étend dans le prolongement de l'un des côtés périphériques (5) du boîtier (2), et par le fait que ce coté périphérique (5) ne forme pas de saillie par rapport au côté du bras (8) s'étendant dans la même direction et contenant l'ouverture de sortie de lumière (23).

4. Appareil de contrôle de surface selon revendication 1, caractérisé par le fait que le capteur de déplacement (16) et le dispositif d'entraînement (15) se trouvent à l'intérieur du boîtier (2).

5. Appareil de contrôle de surface selon revendication 1, caractérisé par le fait que l'axe optique est coudé entre le miroir de déviation (22) et l'organe de fractionnement de rayons (38).

6. Appareil de contrôle de surface selon revendication 1, caractérisé par le fait que l'axe optique présente un déport parallèle entre le miroir de déviation (22) et l'organe de fractionnement de rayons (38).

7. Appareil de contrôle de surface selon revendication 1, caractérisé par le fait que l'objectif (21) est agencé dans le bras (8), à l'extrémité antérieure (9) de celui-ci.

**8.** Appareil de contrôle de surface selon revendication 1, caractérisé par le fait que la distance focale de l'objectif (21) est plus courte que sa focale frontale.

**9.** Appareil de contrôle de surface selon revendication 1, caractérisé par le fait que le capteur de déplacement (16) comporte un transmetteur différentiel (61, 59) doté d'un entrefer (58), lequel est bordé par des surfaces polaires et s'étend sensiblement radialement par rapport à l'axe de pivotement (12) du bras (8), et dans lequel est mobile une pièce ferromagnétique (55) en forme de lame qui est fixée au bras (8) et s'étend radialement par rapport à l'axe de pivotement (12) du bras (8).

**10.** Appareil de contrôle de surface selon revendication 1, caractérisé par le fait que le dispositif d'entraînement (15) est un dispositif d'entraînement à bobine mobile, dont la bobine mobile (47) prend assise, à l'intérieur du boîtier (2), sur le bras (8) ou sur un prolongement (42) de celui-ci, et dont les moyens (49, 51, 52) générant le champ magnétostatique sont reliés au boîtier (2), éventuellement avec possibilité de réglage.

**11.** Appareil de contrôle de surface selon revendication 10, caractérisé par le fait que la bobine mobile (47) se trouve dans un interstice annulaire (48).

**12.** Appareil de contrôle de surface selon revendication 1, caractérisé par le fait que la source de lumière est un laser.

**13.** Appareil de contrôle de surface selon la revendication 1 caractérisé par le fait que le détecteur de lumière (41) est constitué par plusieurs photodiodes ou phototransistors (65 à 68) se trouvant sensiblement dans le plan focal du collimateur (36), et par le fait qu'il y a, entre le collimateur (36) et le détecteur de lumière (41), des coins optiques (63, 64) qui partagent le chemin optique en le répartissant entre photodiodes et/ou phototransistors (65 à 68).

**14.** Appareil de contrôle de surface selon revendication 1, caractérisé par le fait que l'ouverture de sortie de lumière (23) est fermée par un matériau transparent.

Fig. 1

EP 0 258 588 B1

Fig.2

Fig.3